# EUROPÄISCHE PATENTSCHRIFT

(11) **EP 0 425 941 B1**
(45) Veröffentlichungstag und Bekanntmachung des Hinweises auf die Patenterteilung: **22.12.1993**
(21) Anmeldenummer: 90120139.2
(22) Anmeldetag: 20.10.1990
(51) Int. Cl.: B01D 19/00, B01F 3/04, C02F 1/02, C02F 1/20

(54) **Apparat zur Entgasung und Aufwärmung von Wasser**
Apparatus for degasification and heating of water
Dispositif de dégazage et de chauffage d'eau

(30) Priorität: 31.10.1989 CH 3933/89
(43) Veröffentlichungstag der Anmeldung: 08.05.1991
(73) Patentinhaber: ASEA BROWN BOVERI AG, 5400 Baden (CH)
(72) Erfinder: Blangetti, Francisco, CH-5400 Baden (CH); Muri, Werner, CH-5406 Baden-Rütihof (CH); Youssef, Mustafa, Dr., CH-8046 Zürich (CH)

(56) Entgegenhaltungen:
- DE-A- 2 130 248
- GB-A- 2 132 502
- US-A- 1 511 876

## Beschreibung

Die Erfindung betrifft einen Apparat zur Entgasung und Aufwärmung von Wasser mittels Dampf, im wesentlichen bestehend aus einer Kolonne mit darin angeordneten Füllkörpern, mit einer am Kolonnenkopf angeordnetem Verteiler für das zu entgasende Wasser, mit einer stromaufwärts (am Kopf) der Kolonne angeordneten Wasserzufuhrleitung, mit einer stromabwärts (am Boden ) der Kolonne angeordneten Wasserabführleitung, sowie mit einer Dampfzufuhrleitung und einer Entlüftungsleitung für das abzusaugende Gas/Dampf-Gemisch, wobei die vier Leitungen in Gehäuse münden, die oberhalb und unterhalb der vorzugsweise zylindrischen Kolonne mit dieser verbunden sind.

Derartige Apparate können im Kraftwerksbau insbesondere zum Entgasen des Speisewassers angewendet werden. In modernen Kraftwerkanlagen, besonders bei Kombi-Typen, ist der konsumtive Verbrauch von aufbereitetem Wasser sehr gross. Die klassischen Kondensationsanlage z.B. benötigen als Zusatzwasser normalerweise 1 bis 2 %, bezogen auf den gesamt zirkulierenden Massenstrom des Dampf-Kondensat-Kreislaufes. In Kombi-Anlagen mit Dampfinjektion zur Reduzierung der Emission von Stickstoffoxyden steigt diese Prozentzahl auf 15 % und noch mehr.

Ein anderer wichtiger Fall stellen die Anlagen, die Prozessdampf erzeugen, dar. Das von Wärmetauschern, Reaktoren, Heizern etc. zurückfliessende Kondensat enthält meistens grosse Mengen an gelöster Luft, da das Kondensat vielmals in offenen Kanälen und Speichertanks mit der Luft in Kontakt gekommen ist. In nicht wenigen Fällen wird auch noch Regenwasser beigemengt.

Die konventionellen Entgaser - in der Regel kombiniert mit Speisewassertanks - sind wenig geeignet, dieser Aufgabe zu bewerkstelligen.

Bekannt im Zusammenhang mit der Entgasung von Flüssigkeiten sind Austauschsäulen, auch Kolonnen genannt (LUEGER, Band 16, Lexikon der Verfahrenstechnik, Vierte Auflage, Deutsche Verlags-Anstalt Stuttgart, Seite 51). Es handelt sich in der Regel um zylindrische Rohre,, in denen der Dampf und die Flüssigkeit eines Gemisches im Gegenstrom oder im Kreuz-Gegenstrom zueinander geführt werden. Zur Anwendung gelangen unter anderm sogenannte Füllkörperkolonnen, die innerhalb des Säulenmantels regelmässig oder unregelmässig gelagerte Füllkörper enthalten. Darin werden die Flüssigkeit und der Dampf eines zu trennenden Gemischs so im Gegenstrom zueinander geführt, dass sich beide Phasen zum Stoff- und zum Wärmeaustausch möglichst innig berühren.

Die Verwendung einer Füllkörpersäule in Gegenstromschaltung ist - zum Erzielen einer maximalen Trennarbeit bei einer bestimmten Füllkörperhöhe - prinzipiell richtig. Die Anwesenheit einer grösseren Unterkühlung bringt jedoch bei einer Gegenstromschaltung das Problem mit sich, dass ein sehr grosser Anteil des Dampfes den unteren Teil der Säule überwinden muss (Überflutung der Packung), ohne signifikante Wirkung für die stoffkinetische Trennarbeit, die im unteren Teil der Säule geschieht, da die Aufwärmung und der Sättigungsprozess des Kondensates praktisch im oberen Teil stattfinden. Die Folge einer solchen konstruktiven Lösung ist jedoch, dass der Durchmesser der Säule sehr gross werden muss, um die Überflutung der Packung zu verhindern, mit beträchtlichen Mehrkosten für den Apparat.

Der Erfindung liegt die Aufgabe zugrunde, einen neuen Hochleistungsentgaser zu konzipieren, der ohne signifikanten Druckverlust das unterkühlte, zu entgasende Wasser mit Dampf in Kontakt bringt, so dass die Rückbildung der Unterkühlung und die Entfernung aller gelösten Gase - im wesentlichen Stickstoff, Sauerstoff und Kohlendioxyd - bewerkstelligt wird.

Erfindungsgemäss wird diese dadurch erreicht,
- dass die Dampfzufuhrleitung stromaufwärts der Kolonne und die Entlüftungsleitung stromabwärts der Kolonne in die entsprechenden Gehäuse münden;
- dass stromaufwärts des Verteilers ein kegelförmiger Mischraum vorgesehen ist, in welchen das zu entgasende Wasser über Düsen eingespritzt wird;
- und dass die Begrenzungswand des kegelförmigen Mischraums von einem Dampfverteilungsraum umgeben ist und mit diesem über Oeffnungen in der Begrenzungswand kommuniziert.

Dieser neue Apparat ist nicht primär als Ersatz des klassischen Mischvorwärmer-Entgasers gedacht - obwohl in manchen Situationen auch diese der Fall sein könnte - sondern vielmehr als Ergänzung zu ihm. Ganz besonders kann er als Vorentgaser für beispielsweise Regenwasser eingesetzt werden.

Der neue Entgasertyp weist folgende Vorteile auf:
- Er bietet die Möglichkeit einer grösseren Aufwärmung des Wassers ohne die Gefahr der Flutgrenze, welche in den herkömmlichen Entgasertypen (d.h. im Gegenstrom, Dampfeinführung unterhalb der Packung) erreicht werden kann. Damit ist ein stabiles hydraulisches Verhalten bei grösseren Heizdampfströmen gewährleistet.
- Er weist eine kompakte Bauweise auf und benötigt ein niedrigeres Packungsvolumen im Vergleich zu einer konventionellen Gegenstromschaltung.
- Er arbeitet ohne nennenswerte Druckverluste.

Besonders zweckmässig ist es, wenn der kegelige Mischraum austrittsseitig eine grösseren Durchmesser aufweist als die Kolonne und wenn der Spritzwinkel des in den Mischraum einzudüsenden Wassers mindest annähernd dem Kegelwinkel der Begrenzungswand entspricht. Hierdurch erreicht man, dass die von den Düsen versprühten Wassertröpfchen im wesntlichen ihre Grösse beibehalten d.h., dass keine Tropfenkoaleszenz stattfindet.

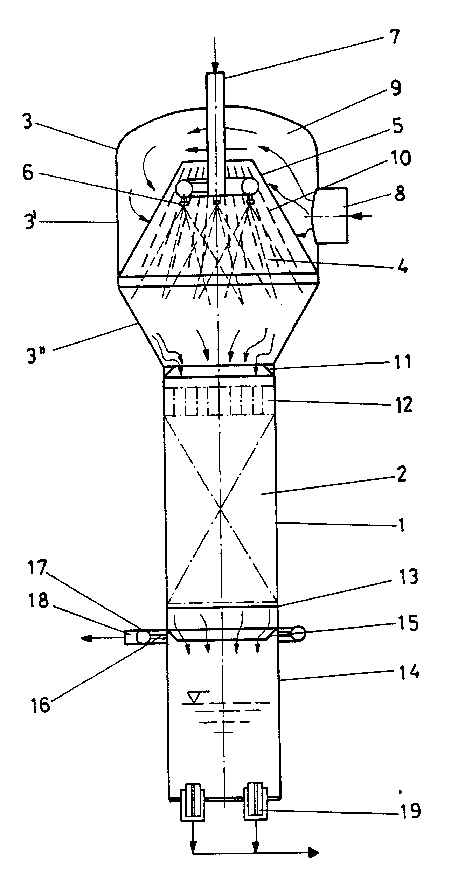

In der Zeichnung ist anhand eines Mischvorwärmer/Entgasers für Kraftwerksanwendung ein Ausführungsbeispiel der Erfindung dargestellt. Dir einzige Fig. zeigt schematisch einen Längsschnitt durch einen vertikal angeordneten Entgaser. Die Strömungsrichtungen der Arbeitsmedien sind mit Pfeilen bezeichnet.

Obwohl Mischvorwärmer/Entgaser in Struktur und Funktion hinlänglich bekannt sind, sei deren Problematik kurz erläutert: Die Entgasung bei gleichzeitiger Aufwärmung, wie sie typischerweise in Kraftwerkanlagen auftritt, zeichnet sich durch einige Besonderheiten aus. Zunächst verfügt man für die Aufwärmung über gesättigten Niederdruckdampf, dessen Temperatur normalerweise in der Umgebung von 100 °C liegt. Weiterhin ist im Sinne einer optimalen Nutzung der Wärme eine Drosselung des Dampfes und damit eine Verringerung der zugehörigen Sättigungstemperatur nicht zulässig. Die Folge davon ist der von unterkühltem Kondensat abgesaugte Dampfmassenstrom, nur durch die Unterkühlung und den Massenstrom des Kondensates bedingt. Mit anderen Worten, es stellt sich im Entgaser ein natürlicher Beharrungszustand ein, der nur von den Zuständen und der Stärke der involvierten Ströme abhängt, ohne die Einwirkung eines Regelkreises zur Kontrolle der genannten Wirkgrössen.

Die Austreibung der im Kondensat gelösten Gase geschieht zunächst auf rein thermodynamischer Basis, da die Absenkung des Druckes durch die Versprühung und die Erhöhung der Temperatur des Kondensates durch die Aufwärmung mit Dampf eine Verminderung der Sättigungswerte der gelösten Gase hervorruft (Sprudeleffekt), wodurch der Partialdruck der gelösten Gase den herrschenden Gesamtdruck übersteigt. Der massgebende Anteil der Entgasung geschieht jedoch normalerweise auf rein stoffkinetischer Basis durch diffusiven Transport der gelösten Gase über die Gas/Flüssigkeitsgrenzschicht. Dieser Transportprozess kann erst nur nach Erreichen eines thermischen Gleichgewichts stattfinden.

Die Entfernung der in der Gas-Phase befindlichen Gase kann nur dann möglich sein, wen ein Anteil des eingeführten und mit den ausgetriebenen Gasen angereichertem Dampfes in ein Gefäss bei einem niedrigeren Druck - normalerweise dem Kondensator - abgelassen wird ("purge" oder "venting").

Hinsichtlich dieser Problematik sind Aufbau und Funktionsweise solcher Apparate zur Entgasung soweit bekannt.

Gemäss der Erfindung ist nunmehr eine Gleichstromschaltung gewählt, da diese weitgehend gegen Packungsüberflutung unempfindlich ist. Dabei werden bewusst einige Nachteile der Gleichstromschaltung in Kauf genommen, um das strömungsdynamische Verhalten der Entgasung mit gekoppelter Erwärmung zu begünstigen. Dabei ist der erzielbare, hohe Wert der Desorptionskoeffizienten hervorzuheben.

Der Apparat setzt sich im wesentlichen aus folgenden Teilen zusammen:
- Eine zylindrische Kolonne 1 enthält geschichtete Füllkörper 2, nachstehend Packung genannt. Dabei kann es sich um eine Schüttung handeln, als um eine sogenannte ungeordnete Füllung (random packing). Besser geeignet ist eine geordnete Füllung (regular packing), welche die Vorzüge einer höheren Trennleistung bei geringerem Druckabfall durch homogen gezielte Verteilung bietet. Als Material für solche an sich bekannten Packungen können Edelstahl, Keramik oder Kunststoffgewebe verwendet werden, die sich alle durch eine gute Benetzbarkeit bei wässrigen Systemen auszeichnen. Die Packung ist zumindest an ihrem unteren Ende durch einen Packungsrost 13 in der Kolonne gehalten.
- Auf die vertikal aufgestellte Kolonne 1 ist ein Gehäuse 3 mit grösserem Durchmesser aufgesetzt. Es schliesst oben mit einem Dom ab. Der Obere Teil 3' ist von zylindrischer Form, der untere Teil 3'' ist verjüngt zwecks Anpassung an den Durchmesser der Kolonne. Innerhalb des zylindrischen Gehäuseteils 3' ist eine kegelförmige Mischkammer 4 eingesetzt, deren Begrenzungswand 5 mit ihrem grösseren Durchmesser bündig ist mit dem Gehäuse 3 und zwar an der Stelle des Übergangs vom zylindrische in den verjüngtem Teil.

Im Bereich des kleineren Durchmessers ist innerhalb der kegelförmigen Begrenzungswand 5 ein Wassereinspritzsystem angeordnet. Es handelt sich um ringförmig angeordnete Spritzdüsen 6, die aus einer den Dom des Gehäuses durchdringenden Wasserzufuhrleitung 7 gespiesen werden. Der Spritzwinkel der Düsen entspricht vorzugsweise dem Kegelwinkel der Begrenzungswand 5. Das unterkühlte Wasser, im vorliegenden Fall Kondensat mit hoher O₂-Konzentration wird über diese Düsen in der Mischkammer versprüht.

In den oberen, zylindrischen Teil 3' des Gehäuses mündet seitlich eine Dampfzufuhrleitung 8. Der Dampf verteilt sich ringförmig im Dampfverteilungsraum 9, welcher zwischen Gehäusewand und Begrenzungswand 5 gebildet ist. In der Begrenzungswand sind über den ganzen Umfang und die ganze Höhe Öffnungen 10 in Form von längsgerichteten Schlitzen vorgesehen. Der Dampf, der zur Aufwärmung und Entgasung dient, bläst durch diese Schlitze konzentrisch nach innen in den Mischraum und vermischt sich mit dem unterkühlten, eingedüsten Kondensat. Durch die Erwärmung, die jedoch unterhalb der Sättigung für den in der Mischkammer herrschenden Druck bleibt, wird ein Teil der im Kondensat gelösten Gase ausgetrieben (Sprudeleffekt).

Das Kondensat, das an den verjüngten Wänden nach unten rinnt, wird in einem umlaufenden Kragen 11 gesammelt und in den eigentlichen Verteiler 12 der Packung geleitet. Dieser Kragen dient dazu, das Wasser von den Wänden zu entfernen, da dieses Phänomen zur Verringerung der Trennarbeit der Packung führen kann (Channeling). Der Verteiler 12 ist genau oberhalb der Packung 2 vorgesehen. Es handelt sich dabei in der Regel um ein Kanalsystem, in welchem das herabrinnnede aufgewärmte Wasser aufgefangen und über den zylindrischen Querschnitt der Kolonne 1 gleichmäsig verteilt wird.
- Das Wasser und der Dampf strömen durch mehrere Schichten der regulären Packung im Gleichstrom parallel nach unten. In der Packung wird die restliche Unterkühlung des Wassers eliminiert, wofür nur ca. 100 bis 150 mm der Packung notwendig sind. Nach dem Erreichen des thermischen Gleichgewichts findet der Entgasungsvorgang in der Säule auf rein stoffkinetischer Basis statt.
- Mit ihrem unteren Ende ist die Kolonne 1 auf ein zweites Gehäuse 14 aufgesetzt. An dessen tiefstem Punkt sind zwei Wasserabführleitungen 19 für das entgaste und aufgewärmte Kondensat angebracht. Unterhalb des Packungsrostes 13 ist ein umlaufender Kragen 15 untergebracht, welcher zusammen mit der Gehäusewand einen vor dem herabregnenden Kondensat geschützten Ringraum bildet. Dieser dient der Entfernung des mit Luft angereicherten Dampfes. Hierzu sind an der Wand des Gehäuses 14 eine Anzahl von Verbindungsrohre 16 angebracht, die an eine Ringleitung 17 angeschlossen sind. Durch eine mit der Ringleitung 17 verbundene Entlüftungsleitung 18 werden nahezu alle gelösten gase mit einem Spüldampfstrom zum nicht gezeigten Sauger bzw. Kondensator gefördert. Durch kritische oder unterkritische Blenden in den Verbindungsrohren lässt sich der Spüldampfmassenstrom regulieren.

Der Massenstrom des Sauggemisches wird derart reguliert, dass dieser zumindest 1,5 - 2 mal den minimalen Wert für die Aufgabe darstellt. Dieser minimale Wert wird aus der Gleichgewichtskonzentration in der Gasphase zu der gewünschten Austrittskonzentration des Sauerstoffes im Kondensat am Austritt der Packung ermittelt.

Der typische Arbeitsbereich eines erfindungsgemässen Apparates liegt bei einem Kondensatmassenstrom von grösser als 10 kg/s und einer Aufwärmung von grösser als 20 °C mit Sauerstoffkonzentrationen im Bereich der Sättigung bei normalem Druck von 7'000-10'000 ppb beim Eintritt und etwa 50 ppb beim Austritt des Entgasers. Bei Reduzierung der Eingangskonzentration lässt sich entsprechend die Austrittskonzentration bis auf 5-10 ppb senken. Darin bedeutet ppb "part per billon", was im SI-Massystem 10⁻⁹ kg O₂/kg Kondensat entspricht.

Es versteht sich, dass auch im Zusammenhang mit den genannten Zahlenwerten hinsichtlich der Dimensionierung des Apparates und insbesondere der Packungshöhe auf die Angabe von Absolutwerten verzichtet werden muss, da diese Werte aufgrund ihrer Abhängigkeit von allzu zahlreichen Parametern ohnehin zu wenig aussagekräftig sind. Massgebend für die Auslegung ist einzig, dass zuerst die Aufwärmung und dann die Entgasung des Wassers stattfindet.

## Patentansprüche

1. Apparat zur Entgasung und Aufwärmung von Wasser mittels Dampf, im wesentlichen bestehend aus einer Kolonne (1) mit darin angeordneten Füllkörpern (2), mit einer am Kolonnenkopf angeordnetem Verteiler (12) für das zu entgasende Wasser, mit einer stromaufwärts der Kolonne angeordneten Wasserzufuhrleitung (7), mit einer stromabwärts der Kolonne angeordneten Wasserabführleitung (19), sowie mit einer Dampfzufuhrleitung (8) und einer Entlüftungsleitung (18) für das abzusaugende Gas/Dampf-Gemisch, wobei die vier Leitungen (7,8,18,19) in Gehäuse (3,14) münden, die oberhalb und unterhalb der vorzugsweise zylindrischen Kolonne (1) mit dieser verbunden sind
dadurch gekennzeichnet,
- dass die Dampfzufuhrleitung (8) stromaufwärts der Kolonne und die Entlüftungsleitung (18) stromabwärts der Kolonne in die entsprechenden Gehäuse (3,14) münden;
- dass stromaufwärts des Verteilers (12) ein kegelförmiger Mischraum (4) vorgesehen ist, in welchen das zu entgasende Wasser über Düsen (6) eingespritzt wird;
- und dass die Begrenzungswand (5) des kegelförmigen Mischraums (4) von einem Dampfverteilungsraum (9) umgeben ist und mit diesem über Oeffnungen (10) in der Begrenzungswand kommuniziert.

2. Apparat nach Anspruch 1, dadurch gekennzeichnet, dass der kegelige Mischraum (4) austrittsseitig eine grösseren Durchmesser aufweist als die Kolonne (1).

3. Apparat nach Anspruch 1, dadurch gekennzeichnet, dass die Oeffnungen (10) in der Begrenzungswand (5) schlitzförmig ausgebildet sind.

4. Apparat nach Anspruch 1, dadurch gekennzeichnet, dass der Spritzwinkel des in den Mischraum (4) einzudüsenden Wassers mindest annähernd dem Kegelwinkel der Begrenzungswand (5) entspricht.

## Claims

1. Apparatus for degassing and heating water by means of steam, essentially comprising a column (1) with packing bodies (2) arranged therein, with a distributor (12) arranged at the column head for the water to be degassed, with a water supply line (7) arranged upstream of the column, with a water outlet line (19) arranged downstream of the column and also a steam supply line (8) and a venting line (18) for the gas/steam mixture to be exhausted, the four lines (7, 8, 18, 19) opening into housings (3, 14) which are connected above and below the preferably cylindrical column (1) to the latter, characterised in that
- the steam supply line (8) and the venting line (18) open into the appropriate housings (3, 14) upstream and downstream of the column respectively;
- in that a conical mixing chamber (4) into which the water to be degassed is injected via nozzles (6) is provided upstream of the distributor (12);
- and in that the boundary wall (5) of the conical mixing chamber (4) is surrounded by a steam distribution chamber (9) and communicates with the latter via openings in the boundary wall.

2. Apparatus according to Claim 1, characterised in that the conical mixing chamber (4) has a larger diameter on the exit side than the column (1).

3. Apparatus according to Claim 1, characterised in that the openings (10) in the boundary wall (5) are of slottype construction.

4. Apparatus according to Claim 1, characterised in that the injection angle of the water to be injected into the mixing chamber (4) is at least approximately equal to the cone angle of the boundary wall (5).

## Revendications

1. Appareil pour le dégazage et le réchauffage d'eau au moyen de vapeur, se composant essentiellement d'une colonne (1) avec des corps de remplissage (2) disposés à l'intérieur, avec un distributeur (12) pour l'eau à dégazer disposé à la tête de la colonne, avec une conduite d'arrivée d'eau (7) disposée en amont de la colonne, avec une conduite d'évacuation d'eau (19) disposée en aval de la colonne, ainsi qu'avec une conduite d'arrivée de vapeur (8) et une conduite d'extraction (18) pour le mélange gaz/vapeur à aspirer, les quatre conduites (7, 8, 18, 19) débouchant dans des enceintes (3, 14) qui sont raccordées à la colonne (1) de préférence cylindrique, au-dessus et en dessous de celle-ci, caractérisé en ce que
- la conduite d'arrivée de vapeur (8) débouche en amont de la colonne et la conduite d'extraction (18) débouche en aval de la colonne dans des enceintes (3, 14) correspondantes; en ce que
- il est prévu, en amont du distributeur (12), une chambre de mélange (4) de forme conique, dans laquelle l'eau à dégazer est pulvérisée par des gicleurs (6); et en ce que
- la paroi de séparation (5) de la chambre de mélange (4) de forme conique est entourée par une chambre de répartition de la vapeur (9) et communique avec celle-ci par des ouvertures (10) dans la paroi de séparation.

2. Appareil suivant la revendication 1, caractérisé en ce que la chambre de mélange (4) de forme conique présente à sa sortie un plus grand diamètre que la colonne (1).

3. Appareil suivant la revendication 1, caractérisé en ce que les ouvertures (10) dans la paroi de séparation (5) sont réalisées en forme de fentes.

4. Appareil suivant la revendication 1, caractérisé en ce que l'angle de pulvérisation de l'eau à injecter dans la chambre de mélange (4) correspond au moins approximativement à l'angle d'ouverture de la paroi de séparation (5).
